# EUROPEAN PATENT APPLICATION

(11) **EP 4 712 331 A1**
(43) Date of publication of application: **18.03.2026**
(21) Application number: 24823567.3
(22) Date of filing: 29.04.2024
(51) Int. Cl.: H02M 3/28, H02M 3/335, H02M 1/00, H02M 1/08

(54) **ELECTRONIC DEVICE COMPRISING CONVERTER CIRCUIT AND CONTROL METHOD THEREFOR**

(30) Priority: 12.06.2023 KR 20230075108
(71) Applicant: Samsung Electronics Co., Ltd., Suwon-si, Gyeonggi-do 16677 (KR)
(72) Inventor: KIM, Keonwoo, Suwon-si, Gyeonggi-do 16677 (KR); KIM, Moonyoung, Suwon-si, Gyeonggi-do 16677 (KR)
(74) Representative: Walaski, Jan Filip
(86) International application number: PCT/KR2024/005753
(87) International publication number: WO 2024/258046

(57) **Abstract**

The present disclosure relates to an electronic device comprising a converter circuit for current balancing, and a control method therefor. The electronic device may comprise a plurality of half-bridge converters connected in parallel to share a resonance capacitor. The electronic device can control a first half bridge unit included in a first converter circuit and a second half bridge circuit included in a second converter unit such that the first converter circuit and the second converter unit can be sequentially started at a first time interval (t_{d}).

## Description

### [Technical Field]

The disclosure relates to an electronic device including a converter circuit for current balancing and a control method therefor.

### [Background Art]

With recent advances in electronic technology, various types of electronic devices have been developed and distributed.

As an example of a converter circuit applicable to these electronic devices, a half-bridge LLC resonant converter is widely used because it enables zero voltage switching (ZVS) and has a highly power-efficient structure.

For electronic devices requiring high power, at least two or more half-bridge LLC resonant converters may be connected in parallel in use. In such a case, a current balancing is required to distribute the current evenly among multiple LLC resonant converters. For the current balancing, a load share circuit may be used; however, due to the increase in volume and production costs caused by adding such a load share circuit, a passive current balancing scheme may be utilized.

### [Disclosure of Invention]

### [Technical Problems]

An embodiment of the disclosure may provide a converter circuit that allows a plurality of resonant converters in an electronic device to be sequentially activated with a time interval.

### [Solution to Problems]

An electronic device according to an embodiment of the disclosure may include a first converter circuit having a resonant capacitor and including a first leakage inductor and a first transformer, a second converter circuit connected in parallel with the first converter circuit to share the resonant capacitor and including a second leakage inductor and a second transformer, and a control unit configured to control activation of the first converter circuit and the second converter circuit.

According to an embodiment, the control unit may be configured to control a first half-bridge unit included in the first converter circuit and a second half-bridge unit included in the second converter circuit such that the first converter circuit and the second converter may be sequentially activated with a first time interval (t_{d}).

### [Effect of Invention]

According to an embodiment of the disclosure, a plurality of resonant converters included in an electronic device may be sequentially activated, thereby reducing an inrush voltage applied to a leakage inductor.

The technical problems to be addressed in the disclosure are not limited to those mentioned above, and other technical problems not mentioned above may be derived from example embodiments of the disclosure by those having ordinary knowledge in the art.

### [Brief Description of Drawings]

FIG. 1 illustrates a structure of a converter circuit according to an embodiment of the disclosure.
FIG. 2 illustrates an equivalent circuit of a converter circuit shown in FIG. 1, according to an embodiment of the disclosure.
FIG. 3A illustrates a structure of a converter circuit according to an embodiment of the disclosure.
FIG. 3B illustrates a structure of a converter circuit according to an embodiment of the disclosure.
FIGS. 4A and 4B each illustrate an equivalent circuit of a converter circuit shown in FIGS. 3A and 3B, according to an embodiment of the disclosure.
FIGS. 5A and 5B are graphs illustrating an inrush current generated in a leakage inductor, according to an embodiment of the present invention.
FIG. 6 illustrates a structure of a soft starter for controlling a converter circuit, according to an embodiment of the disclosure.
FIG. 7 is a graph showing a voltage at a certain point over time, according to an embodiment of the disclosure.
FIG. 8 illustrates a structure of a converter circuit according to an embodiment of the disclosure.
In conjunction with the description of the drawings, the same or similar reference numerals may be used for the same or similar components.

### [Mode for the Invention]

Hereinafter, embodiments of the disclosure will be described in detail with reference to the drawings so that a person of ordinary skill in the art (hereinafter, referred to as 'one skilled in the art') may easily implement the embodiments. However, the disclosure may be implemented in various different forms and is not limited to the embodiments described herein. In relation to the description of the drawings, the same or similar reference numerals may be used for the same or similar components. Further, in the drawings and the related description, descriptions of well-known functions and configurations may be omitted for clarity and conciseness.

In various embodiments of the disclosure, when a certain part is referred to as "include/comprise" a certain component, it may mean that it may further contain other components rather than excluding the other components, unless specifically stated to the contrary. Further, when it is referred to as "connected" in this document, it may mean that it is electrically or physically connected, unless specifically stated otherwise.

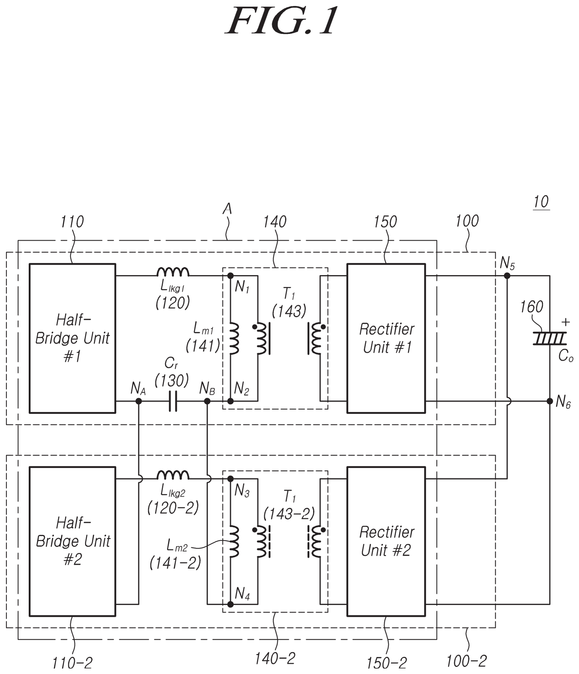

A converter circuit to be described below (e.g., a converter circuit 10 of FIG. 1) is to describe a circuit applied as an example of a half-bridge LLC resonant converter circuit (hereinafter, simply referred to as a 'converter' for convenience of description) to implement a power supply included in an electronic device. In case that the electronic device requires high power, the power supply may be implemented by connecting the resonant converters in parallel. The current values output from the output terminals of the parallel-connected converters need to be evenly distributed, i.e., current balancing needs to be satisfied. To this end, the current output from the output terminals may be detected.

To achieve the aforementioned current balancing, it may be proposed a scheme of implementing a converter circuit by connecting a load share circuit to each output terminal of converters connected in parallel, or a scheme of implementing a converter circuit with a differential mode coupled resonant inductor structure, but this may cause an increased manufacturing cost or an increased volume of the converter circuit.

Therefore, to achieve such current balancing without additional manufacturing cost and an increase in volume, a converter structure sharing a resonant capacitor may be proposed. Hereinafter, the converter circuit 10 to be described in the present disclosure represents an example of a half-bridge LLC converter structure sharing a resonant capacitor.

FIG. 1 illustrates an example structure of a converter circuit 10 according to an embodiment.

Referring to FIG. 1, the converter circuit 10 illustrated may be applied to various electronic devices. The electronic device may include home appliances such as e.g., a portable terminal, a computer, a tablet PC, a TV, or an automobile. However, the disclosure is not limited thereto and may include all types of electronic devices having a power supply unit.

According to an embodiment, the converter circuit 10 may be included in a power supply unit. The power supply unit may include, for example, a switching mode power supply (SMPS).

According to an embodiment, the converter circuit 10 may be comprise a plurality of LLC resonant circuits connected in parallel. For example, the converter circuit 10 may include a first converter circuit 100 and a second converter circuit 100-2. The first converter circuit 100 and the second converter circuit 100-2 may be connected in parallel. Both the first converter circuit 100 and the second converter circuit 100-2 may be implemented as LLC resonant circuits.

According to an embodiment, the first converter circuit 100 and the second converter circuit 100-2 may share a resonant capacitor (Cᵣ) 130. For example, an input terminal A node (N_{A}) and an output terminal B node (N_{B}) of the resonant capacitor 130 provided in the first converter circuit 100 may be connected to the second converter circuit 100-2. Such a converter circuit 10 may be referred to as " LLC converter circuit sharing a resonant capacitor", but for convenience of description, it is simply referred to as the converter circuit 10 throughout the disclosure.

According to an embodiment, the first converter circuit 100 may include a first half-bridge unit (half-bridge unit #1) 110, a first leakage inductor (L_{lkg1}) 120, a resonant capacitor (Cᵣ) 130, a first transformer (T₁) 140, and a first rectifier unit (rectifier unit #1) 150. An inductance value of the first leakage inductor 120 may be defined as L_{lkg1}. A capacitance value of the resonant capacitor 130 may be defined as Cᵣ.

According to an embodiment, the second converter circuit 100-2 may include a second half-bridge unit (half-bridge unit #2) 110-2, a second leakage inductor (L_{lkg2}) 120-2, a second transformer (T₂) 140-2, and a second rectifier unit 150-2. An inductance value of the second leakage inductor 120-2 may be defined as L_{lkg2}.

According to an embodiment, the first and second half-bridge units 110 and 110-2 may be implemented as a half-bridge circuit. The first and second half-bridge units 110 and 110-2 may include two switching elements. Here, the switching elements may be implemented with transistors, and may be preferably implemented with metal oxide semiconductor field effect transistors (MOSFETs). These two switching elements included in the first and second half-bridge units 110 and 110-2 may be electrically shorted (short, switch-on, or connected) or electrically opened (open, switch-off, or disconnected). For example, any one of the two switching elements may be shorted and the other may be opened. As another example, both of the two switching elements may be opened. As another example, both of the two switching elements may be shorted. The first and second half-bridge units 110 and 110-2 may supply an output voltage in response to a turn-on or turn-off operation of the two switching elements included therein. For example, the first and second half-bridge units 110 and 110-2 may control a signal output from a power source with a predetermined duty ratio.

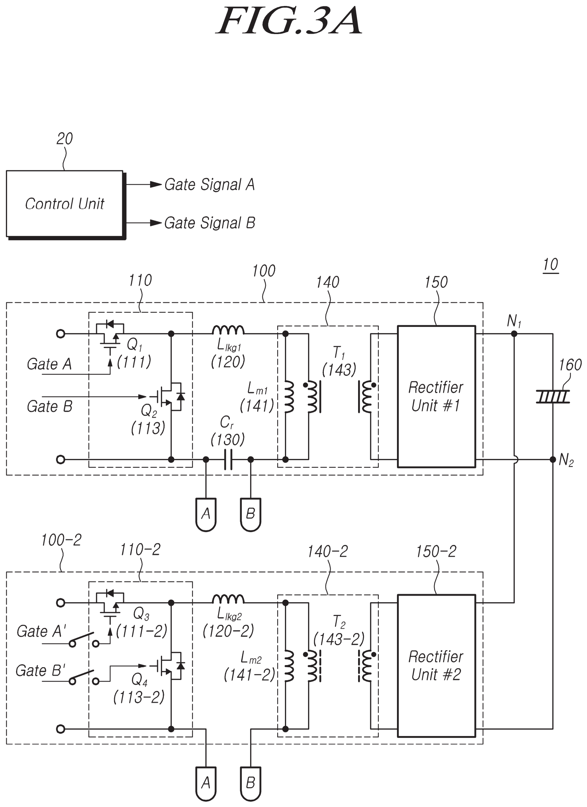

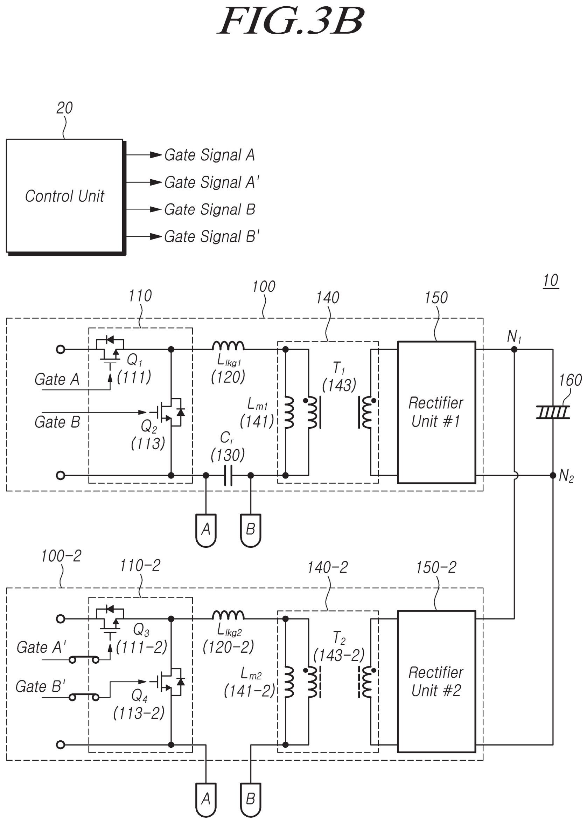

According to an embodiment, to control activation of the switching elements included in the first and second half-bridge units 110 and 110-2, the converter circuit 10 may include a control unit (e.g., a control unit 20 of FIG. 3A or FIG. 3B). The control unit 20 may output a signal to control the switching elements included in the first and second half-bridge units 110 and 110-2 to short-circuit or open-circuit. The control unit 20 may reduce a magnitude of an inrush current generated in the converter circuit 10 by sequentially activating the switching elements. In this context, description will be made in detail below with reference to FIG. 3A and subsequent figures.

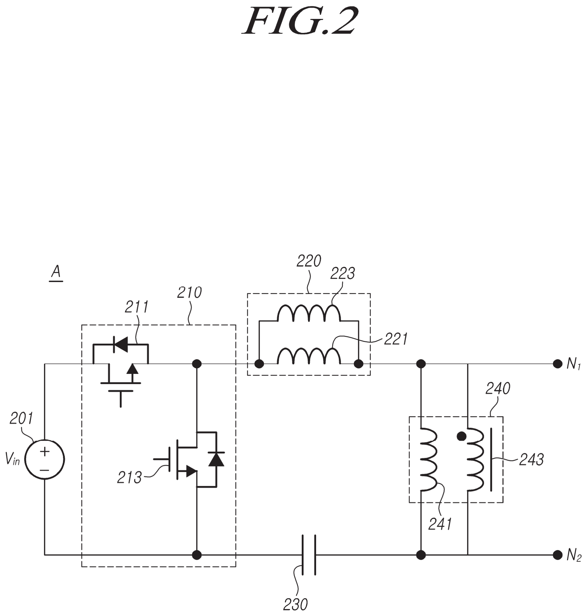

According to an embodiment, the first leakage inductor 120 may be connected between one side of the first half-bridge unit 110 and the first transformer 140. An input terminal of the first leakage inductor 120 may be connected to one output terminal of the first half-bridge unit 110. The second leakage inductor 120-2 may be connected between one side of the second half-bridge unit 110-2 and the second transformer 140-2. An input terminal of the second leakage inductor 120-2 may be connected to one output terminal of the second half-bridge unit 110-2. The first leakage inductor 120 may be generated by the first transformer 140. The second leakage inductor 120-2 may be generated by the second transformer 140-2. That is to say, the first and second leakage inductors 120 and 120-2 may be generated by a leakage flux of the first and second transformers 140 and 140-2. A power signal may flow through the first and second leakage inductors 120 and 120-2, and an inrush current may be generated therein. In this connection, description will be made in detail below with reference to FIG. 2.

According to an embodiment, the resonant capacitor 130 may be connected between one side of the first half-bridge unit 110 and the first transformer 140. The resonant capacitor 130 may be connected between one side of the second half-bridge unit 110-2 and the second transformer 140-2. An input terminal (N_{A}) of the resonant capacitor 130 may be connected to one output terminal of the first half-bridge unit 110. An input terminal (N_{A}) of the resonant capacitor 130 may be connected to one output terminal of the second half-bridge unit 110-2.

According to an embodiment, the first leakage inductor 120 and the resonant capacitor 130 may be connected to an input terminal of the first transformer 140. The first transformer 140 may step-up or step-down a signal delivered from the first half-bridge unit 110 at a predetermined voltage ratio.

According to an embodiment, the first transformer 140 may include a first magnetizing inductor 141 and a first coil unit 143. The first coil unit 143 may include a primary coil and a secondary coil. The number of turns (p) of the primary coil and the number of turns (q) of the secondary coil included in the first coil unit 143 may have a predetermined turn ratio (p:q). The winding direction of the primary coil and the winding direction of the secondary coil included in the first coil unit 143 may be the same. A turn ratio n₁ of the first transformer 140 may be derived as n₁ = q/p. As an example, the first transformer 140 may be assumed to be an ideal transformer.

According to an embodiment, the second leakage inductor 120-2 and the resonant capacitor 130 may be connected to an input terminal of the second transformer unit 140-2. The second transformer unit 140-2 may step-up or step-down a signal delivered from the second half-bridge unit 110-2 at a predetermined voltage ratio.

According to an embodiment, the second transformer 140-2 may include a second magnetizing inductor 141-2 and a second coil unit 143-2. The second coil unit 143-2 may include a primary coil and a secondary coil. The number of turns (r) of the primary coil and the number of turns (s) of the secondary coil included in the second coil unit 143-2 may have a predetermined turn ratio (r:s). The winding direction of the primary coil and the winding direction of the secondary coil included in the first coil unit 143 may be substantially the same. A turn ratio n₂ of the second transformer 140-2 may be derived as n₂ = s/r. As an example, the second transformer 140-2 may be assumed to be an ideal transformer.

According to an embodiment, the turn ratio n₁ of the first transformer 140 and the turn ratio n₂ of the second transformer 140-2 may have substantially the same value. However, the disclosure is not limited thereto, and they may have different values according to the design of the converter circuit 10. Hereinafter, throughout the disclosure, it will be assumed that the turn ratio n₁ of the first transformer 140 and the turn ratio n₂ of the second transformer 140-2 have the same value. The first transformer 140 may have the same winding direction as the second transformer 140-2.

According to an embodiment, the first rectifier unit 150 may be connected to the secondary side of the first transformer 140. The second rectifier unit 150-2 may be connected to the secondary coil side of the second transformer 140-2. The first rectifier unit 150 may rectify an AC signal transformed from the first transformer 140 to a DC signal. The second rectifier unit 150-2 may rectify an AC signal transformed from the second transformer 140-2 to a DC signal.

According to an embodiment, the converter circuit 10 may include an electrolytic capacitor 160. The electrolytic capacitor 160 may be connected in parallel between a secondary side output terminal of the first transformer 140 and a secondary side output terminal of the second transformer 140-2. For example, one end (N₅) of the electrolytic capacitor 160 may be connected to one end of the first rectifier unit 150 and one end of the second rectifier unit 150-2. For example, the other end (N₆) of the electrolytic capacitor 160 may be connected to the other end of the first rectifier unit 150 and the other end of the second rectifier unit 150-2.

FIG. 2 illustrates an equivalent circuit of the converter circuit shown in FIG. 1 (e.g., the converter circuit 10 of FIG. 1) according to an embodiment.

Referring to FIG. 2, it may be understood that an equivalent circuit of a portion of the circuit included in part A of FIG. 1 is shown, at the time of initial driving of the converter circuit 10. The converter circuit 10 may include an input power source (Vᵢₙ) 201.

According to an embodiment, a half-bridge unit 210 (e.g., the first and second half-bridge units 110 and 110-2 of FIG. 1) included in the converter circuit 10 may include a predetermined switch circuit. The switch circuit may include at least two switching elements.

According to an embodiment, the half-bridge unit 210 may include a first switching element 211 and a second switching element 213. The first switching element 211 and/or the second switching element 213 may be implemented with MOSFETs. The first and second switching elements 211 and 213 may be connected in response to a gate signal having a voltage higher than or equal to a threshold level.

According to an embodiment, a phase difference of 180° may be generated between a voltage signal output from the input power source 201 in response to the connection of the first switching element 211 and a voltage signal output from the input power source 201 in response to the connection of the second switching element 213.

According to an embodiment, the first switching element 211 or the second switching element 213 may receive a control signal output from a control unit (e.g., the control unit 20 of FIG. 3) as a gate signal, and may be opened or short-circuited in response to the gate signal.

According to an embodiment, the leakage inductor 220 may include a first leakage inductor 221 (e.g., the first leakage inductor (L_{lkg1}) 120 of FIG. 1) and a second leakage inductor 223 (e.g., the second leakage inductor (L_{lkg2}) 120-2 of FIG. 1). The first leakage inductor 221 may correspond to the first leakage inductor 120 of FIG. 1, and the second leakage inductor 223 may correspond to the second leakage inductor 120-2 of FIG. 1.

According to an embodiment, in the equivalent circuit, the leakage inductor 220, in which the first leakage inductor 221 and the second leakage inductor 223 are connected in parallel, may be derived as a combined value of the first leakage inductor 221 and the second leakage inductor 223. Therefore, an inductance value L of the leakage inductor 220 may be derived as L = (L_{lkg1})*(L_{lkg2}) / ((L_{lkg1})+(L_{lkg2})). The inductance value L is less than the inductance value L_{lkg1} of the first leakage inductor 221 and less than the inductance value L_{lkg2} of the second leakage inductor 223.

According to an embodiment, the resonant capacitor 230 may correspond to the resonant capacitor 130 of FIG. 1.

According to an embodiment, the transformer 240 may correspond to the first transformer 140 or the second transformer 140-2 of FIG. 1. The transformer 240 may include a magnetizing inductor 241 (e.g., the first magnetizing inductor 141 or the second magnetizing inductor 141-2 of FIG. 1) and a transformer 243 (e.g., the first transformer 140 or the second transformer 140-2 of FIG. 1).

According to an embodiment, during initial driving of the converter circuit 10, a voltage value across the magnetizing inductor 241 and the resonant capacitor 230 may correspond to 0V. Therefore, according to Kirchhoff s voltage law (KVL), the voltage value across the leakage inductor 220 may be the same as the voltage of the input power source 201. At this time, the current value flowing through the leakage inductor 220, that is, an inrush current, may have a larger value than in a case where only one of the first leakage inductor 221 or the second leakage inductor 223 exists. This may have an adverse effect on electrical components included in the electronic device or electrical components included in the power supply unit. Therefore, the disclosure may propose a control scheme for controlling such an inrush current generated with an excessive magnitude.

FIGS. 3A and 3B illustrates a structure of the converter circuit 10 (e.g., the converter circuit 10 of FIG. 1) according to an embodiment. FIGS. 3A and 3B may be understood as including a structure proposed for reducing the magnitude of the inrush current that occurs in the converter circuit of FIGS. 1 and 2.

Referring to FIGS. 3A and 3B, the control unit 20 may control only the first converter circuit 100 included in the converter circuit 10 to be activated until a first time interval (t_{d}) elapses after starting a resonance operation (refer to FIG. 3A). In this case, the second converter circuit 100-2 included in the converter circuit 10 may not be activated until the first time interval (t_{d}) elapses. The control unit 20, in case that the first time interval (t_{d}) has elapsed after starting the resonance operation, may control the second converter circuit 100-2 to be activated (refer to FIG. 3B). For example, the converter circuit 10 may cause both the first converter circuit 100 and the second converter circuit 100-2 to be activated after the first time interval (t_{d}) has elapsed from the start of the resonance operation. Hereinafter, the structure of the converter circuit 10 shown in FIGS. 3A and 3B may correspond to that of the converter circuit 10 shown in FIG. 1, and therefore, its redundant descriptions will be omitted. The first converter circuit 100 and the second converter circuit 100-2 may be connected in parallel to share the resonant capacitor 130.

According to an embodiment, the control unit 20 may output control signals (gate signal A (Gate A), gate signal B (Gate B), gate signal A' (Gate A'), and gate signal B' (Gate B')) for controlling an activation of the converter circuit 10. In response to the control signals, the first converter circuit 100 and/or the second converter circuit 100-2 included in the converter circuit 10 may perform a resonance operation. For example, the control unit 20 may output the control signal so that the resonance operation by the second converter circuit 100-2 starts at the first time interval (t_{d}) after the resonance operation by the first converter circuit 100 is initiated. For example, the control unit 20 may be configured to control the first half-bridge unit 110 included in the first converter circuit 100 and the second half-bridge unit 110-2 included in the second converter circuit 100-2 so that the first converter circuit 100 and the second converter circuit 100-2 are activated sequentially with the first time interval (t_{d}) therebetween.

In case that the control unit 20 starts the resonance operation, it may output a first control signal (e.g., gate signal A (Gate A) and gate signal B (Gate B)) for controlling the activation of the first converter circuit 100 included in the converter circuit 10 (refer to FIG. 3A). The first control signal (gate signal A (Gate A) and gate signal B (Gate B)) may control the switching operation of the first half-bridge unit 110 included in the first converter circuit 100.

The control unit 20, in case that the first time interval (t_{d}) has elapsed after the first converter circuit 100 starts the resonance operation, may output a second control signal (gate signal A' (Gate A') and gate signal B' (Gate B')) for controlling the activation of the second converter circuit 100-2 included in the converter circuit 10 (refer to FIG. 3B). The second control signal (gate signal A' (Gate A') and gate signal B' (Gate B')) may control the switching operation of the second half-bridge unit 110-2 included in the second converter circuit 100-2.

According to an embodiment, the first control signal (e.g., gate signal A (Gate A) and gate signal B (Gate B)) output by the control unit 20 may be supplied as a switching control signal for turn-on or turn-off of switching elements (e.g., a first switching element 111 and a second switching element 113) included in the first half-bridge unit 110. For example, the first control signal may include the gate signal A (Gate A) and the gate signal B (Gate B). The gate signal A (Gate A) may be supplied as a switching control signal for turn-on or turn-off of the first switching element 111 included in the first half-bridge unit 110. The gate signal A, for example, may be supplied to a gate terminal (Q₁) of the first switching element 111 to allow the first switching element 111 to be turned on (connected or short-circuited) or turned off (opened or disconnected). The gate signal B (Gate B) may be supplied as a switching control signal for turn-on or turn-off of the second switching element 113 included in the first half-bridge unit 110. The gate signal B, for example, may be supplied to a gate terminal (Q₂) of the second switching element 113 to allow the second switching element 113 to be turned on (connected or short-circuited) or turned off (opened or disconnected). The switching control signal for turning on or turning off the first or second switching element 111 and 113 may also be referred to as a first gate signal.

According to an embodiment, the second control signal (e.g., gate signal A' (Gate A') and gate signal B' (Gate B')) outputted by the control unit 20 may be supplied as a switching control signal for turn-on or turn-off of switching elements (e.g., a third switching element 111-2 and a fourth switching element 113-2) included in the second half-bridge unit 110-2. For example, the second control signal may include a gate signal A' (Gate A'), which is a third gate signal, and a gate signal B' (Gate B'), which is a fourth gate signal. The gate signal A' (Gate A') may be supplied as a switching control signal for turn-on or turn-off of the third switching element 111-2 included in the second half-bridge unit 110-2. The gate signal A', for example, may be supplied to a gate terminal (Q₃) of the third switching element 111-2 to allow the third switching element 111-2 to be turned on (connected or short-circuited) or turned off (opened or disconnected). The gate signal B' (Gate B') may be supplied as a switching control signal for turn-on or turn-off of the fourth switching element 113-2 included in the second half-bridge unit 110-2. The gate signal B', for example, may be supplied to a gate terminal (Q₄) of the fourth switching element 113-2 to allow the fourth switching element 113-2 to be turned on (connected or short-circuited) or turned off (opened or disconnected). The switching control signal for turning on or turning off the third or fourth switching element 111-2 and 113-2 may also be referred to as a second gate signal.

According to an embodiment, the control unit 20 may output a first gate signal (gate signal A and gate signal B) for connecting the first switching element 111 and the second switching element 113, and may output a second gate signal (gate signal A' and gate signal B') for connecting the third switching element 111-2 and the fourth switching element 113-2 after a lapse of a predetermined time interval (e.g., the first time interval (t_{d})). Outputting the first gate signal and the second gate signal with a predetermined time interval, i.e., a delay time (t_{d}), is to reduce an inrush current generated in the leakage inductors 120 and 120-2 in response to the activation of the half-bridge units 110 and 110-2. The delay time (t_{d}) may correspond to a few milliseconds, but the disclosure is not limited thereto and may have various values depending on the setting.

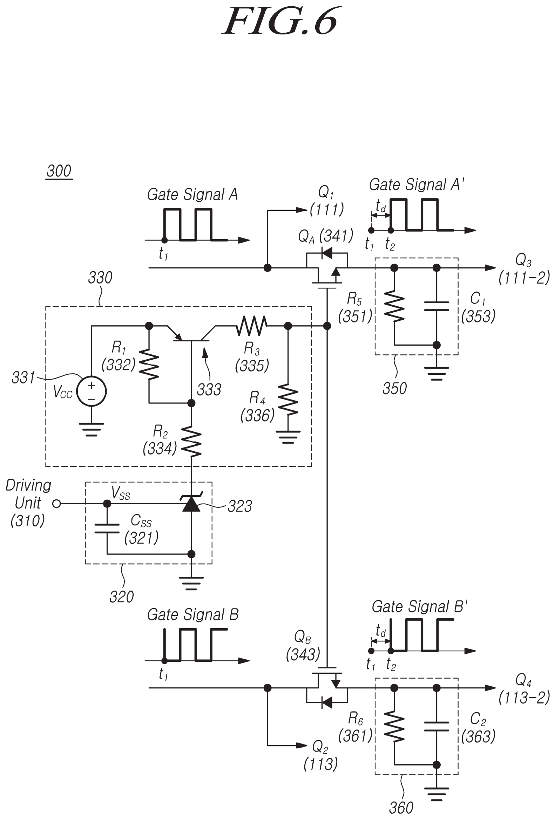

According to an embodiment, the control unit 20 may include a soft starter (e.g., a soft starter 300 of FIG. 6). The soft starter 300 may be configured to output the second gate signal (the gate signal A' and the gate signal B') for the switching operation of the second half-bridge unit 110-2, in response to the elapse of the first time interval (t_{d}) after inputting of the first gate signal (the gate signal A and the gate signal B) for the switching operation of the first half-bridge unit 110. This will be described in detail with reference to FIG. 6.

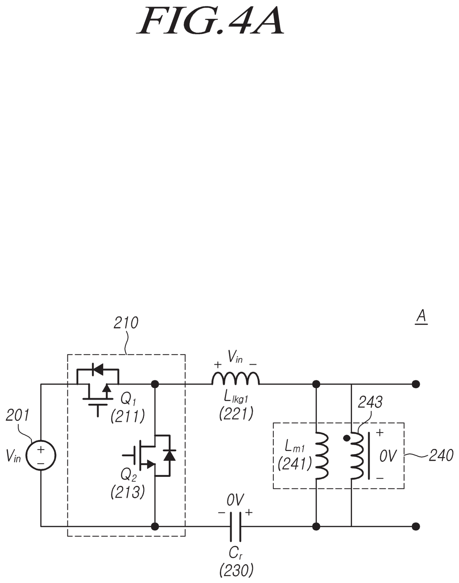

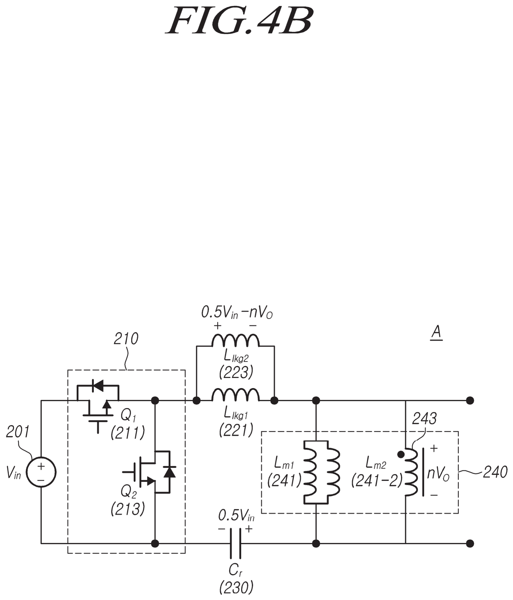

FIGS. 4A and 4B each illustrate an equivalent circuit in case that the converter circuit 10 shown in FIGS. 3A and 3B is activated, according to an embodiment.

Referring to FIGS. 4A and 4B, FIG. 4A shows an equivalent circuit in case that the converter circuit 10 of FIG. 3A is initially activated, and FIG. 4B shows an equivalent circuit in case that the converter circuit 10 of FIG. 3B is initially activated. As the equivalent circuits shown in FIGS. 4A and 4B may correspond in part or in whole to the equivalent circuit shown in FIG. 2, redundant descriptions will be omitted, and its differences will be mainly described.

According to an embodiment, FIG. 4A illustrates an equivalent circuit in case that the first switching element 211 operates in a first state during initial activation. The first state may correspond to an operating state where the first switching element 111 and the second switching element 113 of FIG. 3A are turned on, and the third switching element 111-2 and the fourth switching element 113-2 are turned off. In case that the first switching element 211 operates in the first state, it can be understood that only the first leakage inductor 120 of FIG. 3A exists as the first leakage inductor 221, and only the first magnetizing inductor 141 of FIG. 3A exists as the magnetizing inductor 241.

According to an embodiment, the voltage applied across the resonant capacitor 230 and the transformer 240 in FIG. 4A may be substantially 0V. According to Kirchhoff's voltage law, the voltage applied across the first leakage inductor 221 may be derived as Vᵢₙ. Since the inductance value L_{lkg1} of the first leakage inductor 221 is greater than the inductance value L_{lkg2} in FIG. 2, it may be derived that the magnitude of the inrush current generated in the first leakage inductor 221 is less than that in FIG. 2.

According to an embodiment, FIG. 4B illustrates an equivalent circuit in case that the first switching element 211 operates in a second state when a predetermined time has elapsed after its initial activation. The second state may correspond to an operating state where the first switching element 111 and the second switching element 113 of FIG. 3A are turned on, and the third switching element 111-2 and the fourth switching element 113-2 of FIG. 3B are also turned on. In case that the first switching element 211 operates in the second state, it may be understood that the first leakage inductor 120 and the second leakage inductor 120-2 of FIG. 3B are connected in parallel as the leakage inductors 221 and 223, and the first magnetizing inductor 141 and the second magnetizing inductor 141-2 of FIG. 3B are connected in parallel as the magnetizing inductors 241 and 241-2.

According to an embodiment, in response to the delay time (t_{d}) elapsing after the initial activation, the voltage V(T) across the transformer 240 may be applied as much as V(T) = n*Vo, which is a value obtained by multiplying the output voltage (Vo) by a turn ratio (n) (e.g., n1 or n2 of FIG. 1). In response to elapsing of the delay time (t_{d}), the voltage V(Cᵣ) across the resonant capacitor 230 may be substantially V(Cᵣ) = (1/2)*(Vᵢₙ)±α. This may be understood as being output by 1/2 of the voltage Vin of the input power source 201 because the duty ratio of the half-bridge unit 210 is set to 0.5, and increasing or decreasing by α due to the AC signal of the input power source 201. Here, α may be a very small value compared to (1/2)*(Vᵢₙ). Therefore, the voltage V(Cᵣ) across the resonant capacitor 230 may be expressed as V(Cr) = (1/2)*(Vin).

According to an embodiment, according to Kirchhoff's voltage law, the voltage V(L_{lkg}) applied across the first leakage inductor 221 and the second leakage inductor 223 connected in parallel may be derived as V(L_{lkg})=(1/2)*Vin-(nVₒ). Since the voltage V(L_{lkg}) is less than the voltage across the first leakage inductor 221 in (a), the magnitude of the inrush current generated in the leakage inductors 221 and 223 may be reduced as both the first converter circuit (e.g., the first converter circuit 100 of FIG. 1) and the second converter circuit (e.g., the second converter circuit 100-2 of FIG. 1) are activated.

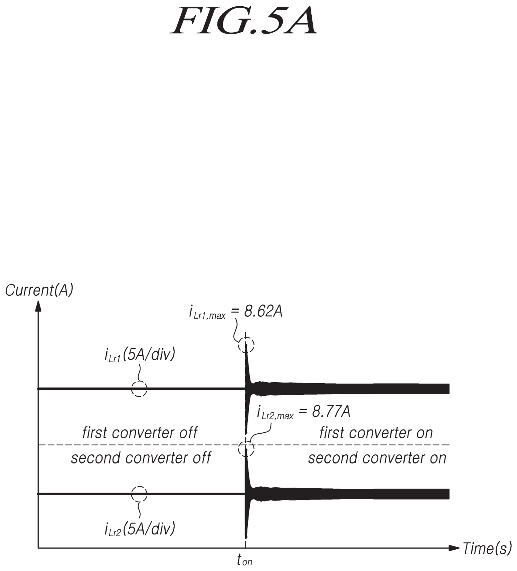

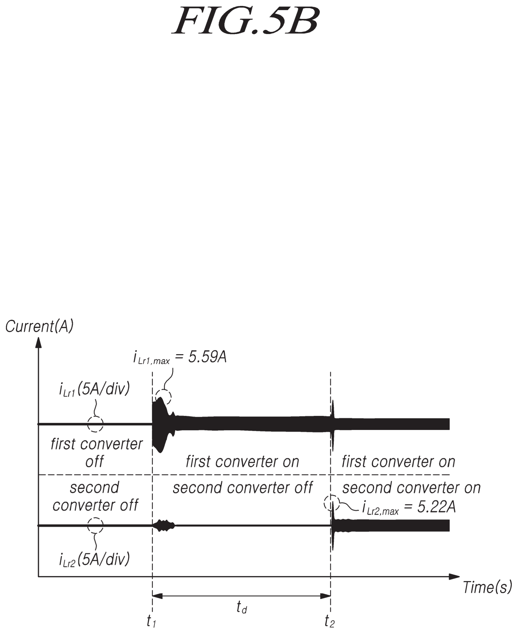

FIGS. 5A and 5B are graphs for showing an inrush current generated in a leakage inductor (e.g., the leakage inductor 220 of FIG. 2 or the first and second leakage inductors 221 and 223 of FIG. 4), according to an embodiment. FIG. 5A is a graph showing the inrush current generated in the leakage inductor (e.g., the leakage inductor 220 of FIG. 2) in the equivalent circuit of FIG. 2, and FIG. 5B may be understood as a graph showing the inrush current generated in the leakage inductor (e.g., the first leakage inductor 221 or the second leakage inductor 223 of FIG. 4) in the equivalent circuits of FIGS. 4A and 4B.

Referring to FIGS. 5A and 5B, the current values shown therein are to represent an experimental example for explaining a reduction of the inrush current according to an embodiment, and the values may change variably depending on the circuit configuration.

According to an embodiment, in the graph of FIG. 5A, both the first converter (e.g., the first converter circuit 100 of FIG. 1) and the second converter (e.g., the second converter circuit 100-2 of FIG. 1) are not activated before a time point tₒₙ, and both the first converter circuit 100 and the second converter circuit 100-2 may be activated at the time point tₒₙ.

According to an embodiment, at the time point tₒₙ, the first converter circuit 100 and the second converter circuit 100-2 may be activated. The first converter circuit 100 and the second converter circuit 100-2 may be activated by the control unit (e.g., the control unit 20 of FIG. 3).

According to an embodiment, at the time point tₒₙ, in response to the activation of the first converter circuit 100 and the second converter circuit 100-2, an inrush current may be generated in the first leakage inductor 120 and the second leakage inductor 120-2. A maximum value (I_{Lr1, max}) of the inrush current generated in the first leakage inductor 120 may be about 8.62A, and a maximum value (I_{Lr2, max}) of the inrush current generated in the second leakage inductor 120-2 may be about 8.77A. The maximum value of the inrush current may be derived according to a voltage value Vin outputted by the input power source (e.g., the input power source 201 of FIG. 2), which is a voltage applied across the first leakage inductor 120 and the second leakage inductor 120-2 in FIG. 2.

According to an embodiment, in the graph of FIG. 5B, both the first converter (e.g., the first converter circuit 100 of FIG. 1) and the second converter (e.g., the second converter circuit 100-2 of FIG. 1) are not activated before a time point t₁, while at the time point t₁, the first converter circuit 100 is activated and the second converter circuit 100-2 is not activated, and at a time point t₂, both the first converter circuit 100 and the second converter circuit 100-2 may be activated. A time interval between the time point t₁ and the time point t₂ may be referred to as a delay time (t_{d-}) (e.g., the delay time (t_{d}) of FIGS. 3A and 3B).

According to an embodiment, at the time point t₁, in response to the activation of the first converter circuit 100, an inrush current may be generated in the first leakage inductor 120. A maximum value (I_{Lr1, max}) of the inrush current generated in the first leakage inductor 120 may be 5.59A. This can be understood as a decrease in inrush current compared to that of FIG. 5A.

According to an embodiment, at the time point t₂, in response to the activation of the second converter circuit 100-2, an inrush current may be generated in the first leakage inductor 120 and the second leakage inductor 120-2. A maximum value (I_{Lr2, max}) of the inrush current generated in the second leakage inductor 120-2 may be about 5.22A. This may be understood as a decrease in inrush current compared to that of FIG. 5A.

According to an embodiment, the inrush current may be reduced as a result of sequentially activating the first converter circuit 100 and the second converter circuit 100-2.

FIG. 6 illustrates an example structure of a soft starter 300 configured to control an activation of a converter circuit (e.g., the converter circuit 10 of FIG. 3A) according to an embodiment. The soft starter 300 may be defined as a circuit for activating a second converter circuit (e.g., the second converter circuit 100-2 of FIG. 3a) after a predetermined time (e.g., a first time interval (t_{d}) or a delay time (t_{d})) has elapsed after a first converter circuit (e.g., the first converter circuit 100 of FIG. 3a) is activated.

Referring to FIG. 6, the soft starter 300 may be configured by combining at least a portion of passive elements (e.g., a resistor, a capacitor, etc.) and switching elements (e.g., a diode, a transistor, etc.). The soft starter 300 is not limited to the illustrated above, and some electrical elements thereof may be changed to perform the same function.

According to an embodiment, the soft starter 300 may include a driving unit 310, a first element unit 320, a second element unit 330, or a switch unit. The first element unit 320 may be configured to perform a switching operation at a first time interval (t_{d}) in response to charging/discharging by a supply voltage. The supply voltage may correspond to a voltage supplied by the driving unit 310. The second element unit 330 may be configured to generate a first switching signal in response to the operation of the first element unit 320 being turned on at the first time interval (t_{d}). The switch unit may be configured to receive a first control signal (gate signal A and gate signal B) from a control unit (e.g., the control unit 20 of FIG. 3A or FIG. 3B) as input and to output a second control signal (gate signal A' and gate signal B') in response to the first switching signal. For example, the switch unit may include two switching elements (e.g., a switching element A 341 and a switching element B 343). A first switching element (Q₁) corresponding to the switching element A 341 may be configured to be turned on or turned off by a first gate signal (gate signal A), which is one of the first control signals. A second switching element (Q₂) corresponding to the switching element B 343 may be configured to be turned on or turned off by a second gate signal (gate signal B), which is one of the first control signals.

According to an embodiment, the soft starter 300 may include a third element unit 350 located between an output terminal of the switching element A 341 and a ground terminal. The third element unit 350 may be located between the output terminal of the switching element A 341 and the ground terminal, and may include a circuit in which one resistor (R₅) 351 and one capacitor (C₁) 353 are connected in parallel. The soft starter 300 may include a fourth element unit 360 located between an output terminal of the switching element B 343 and a ground terminal. The fourth element unit 360 may be located between the output terminal of the switching element B 343 and the ground terminal, and may include a circuit in which one resistor (R₆) 361 and one capacitor (C₂) 363 are connected in parallel.

According to an embodiment, the driving unit 310 may be connected to the first element unit 320. The first element unit 320 may be connected to the second element unit 330. The second element unit 330 may be connected to a gate terminal of the switching element A 341. The second element unit 330 may be connected to a gate terminal of the switching element B 343. A drain terminal of the switching element A 341 may be connected to the third element unit 350. A drain terminal of the switching element B 343 may be connected to the fourth element unit 360.

According to an embodiment, the driving unit 310 may supply an operating voltage for driving the soft starter 300. The driving unit 310 may be connected to a control unit (e.g., the control unit 20 of FIG. 3A). The driving unit 310 may output the operating voltage, which is a signal having a predetermined level, to the soft starter 300.

According to an embodiment, in response to a voltage strength of a signal outputted by the driving unit 310, a control signal for connecting the first and second switching elements 111 and 113 may be output to a gate terminal (Q₁) of the first switching element (e.g., the first switching element 111 of FIG. 3A) and a gate terminal (Q₂) of the second switching element (e.g., the second switching element 113 of FIG. 3A). Hence, the gate signal A may be outputted to the gate terminal (Q₁) of the first switching element 111, and the gate signal B may be outputted to the gate terminal (Q₂) of the second switching element 113. The gate signal A and the gate signal B may have a phase difference of 180°.

For example, a threshold voltage of a gate signal outputted by the driving unit 310 for connecting the first and second switching elements 111 and 113 may be referred to as a first threshold driving voltage.

According to an embodiment, in response to the voltage strength of the signal outputted by the driving unit 310, a control signal for connecting a third switching element 111-2 and the fourth switching element 113-2 may be outputted to a gate terminal (Q₃) of the third switching element (e.g., the third switching element 111-2 of FIG. 3A) and a gate terminal (Q₄) of the fourth switching element (e.g., the fourth switching element 113-2 of FIG. 3A).

For example, a threshold voltage of a gate signal outputted by the driving unit 310 for connecting the third and fourth switching elements (111-2 and 113-2) may be referred to as a second threshold driving voltage.

Hereinafter, a signal processing operation of a circuit for connecting the first and second switching elements (111 and 113) by the driving unit 310 and then connecting the third and fourth switching elements (111-2 and 113-2) after a predetermined time has elapsed will be described.

According to an embodiment, the first element unit 320 may be connected to an output terminal of the driving unit 310. The first element unit 320 may include a capacitor (Cₛₛ) 321 and a diode 323. The diode 323 may be implemented with a Zener diode (or a constant voltage diode), but the disclosure is not limited thereto. The capacitor (Cₛₛ) 321 may be arranged to connect between the driving unit 310 where a supply voltage is inputted and a ground. The capacitor (Cₛₛ) 321 may charge or discharge a predetermined voltage by an operating voltage supplied from the driving unit 310. The diode 323 may perform a switching operation in response to the charging/discharging of the capacitor (Cₛₛ) 321. For example, the diode 323 may be turned on by either the operating voltage supplied by the driving unit 310 or the voltage discharged by the capacitor (Cₛₛ) 321 to form a ground path for the second element unit 330.

According to an embodiment, the second element unit 330 may include a collector voltage (V_{cc}) 331, a first resistor (R₁) 332, a second resistor (R₂) 334, a transistor 333, a third resistor (R₃) 335, and a fourth resistor (R₄) 336. The transistor 333 may be implemented as a PNP transistor. The transistor 333 may perform a function of a switching element. The transistor 333 may have its source terminal connected to the collector voltage (V_{cc}) 331, its gate terminal connected to the first element unit 320 via the second resistor 334, and its drain terminal connected to the gate terminal of the switching element A 341 and the switching element B 343 via the third resistor 335. The first resistor 332 may be connected between the gate terminal and the source terminal of the transistor 333. The fourth resistor 336 may connect an output terminal, which is connected to the gate terminals of the switching element A 341 and the switching element B 343 from among both terminals of the third resistor 335, to a ground.

According to an embodiment, the switching element A 341 may output the gate signal A, which is one of the first control signals, as gate signal A', which is one of the second control signals, in response to a switching signal outputted from the second element unit 330.

According to an embodiment, the switching element B 343 may output the gate signal B, which is one of the first control signals, as gate signal B', which is one of the second control signals, in response to the switching signal outputted from the second element unit 330.

According to an embodiment, the driving unit 310 may output a signal having a certain level of voltage. The driving unit 310 may be implemented integrally with the control unit (e.g., the control unit 20 of FIG. 3A) or as a separate configuration. In case that the driving unit 310 is implemented as a separate configuration from the control unit 20, an output terminal of the control unit 20 and an input terminal of the driving unit 310 may be connected. The signal outputted from the driving unit 310 may be transmitted to the switching element A 341 and the switching element B 343 via the first element unit 320 and the second element unit 330.

According to an embodiment, in case that a signal having a voltage more than or equal to a threshold level is outputted from the driving unit 310, the signal may be outputted to the second element unit 330.

According to an embodiment, in response to inputting of a signal having a voltage more than or equal to a threshold level from the first element unit 320, the second element unit 330 may output a voltage by the collector voltage 331 to the switching element A 341 and the switching element B 343. Based on the collector signal, the switching element A 341 and the switching element B 343 may be connected with each other. In response to the connection of the switching element A 341 and the switching element B 343, the gate signal A' may be inputted to a gate terminal (Q3) of the third switching element 111-2, and the gate signal B' may be inputted to a gate terminal (Q4) of the fourth switching element 113-2. The gate signal A' and the gate signal B' may have a phase difference of 180°.

According to an embodiment, the gate signal A' may be delayed by a delay time (t_{d}) compared to the gate signal A. The gate signal B' may be delayed by a delay time (t_{d}) compared to the gate signal B. Accordingly, the second converter circuit 100-2 may be activated after the delay time (td) has elapsed from the activation of the first converter circuit 100, and the inrush current generated in the leakage inductors (e.g., the leakage inductors 221 and 223 of FIG. 4) may be reduced.

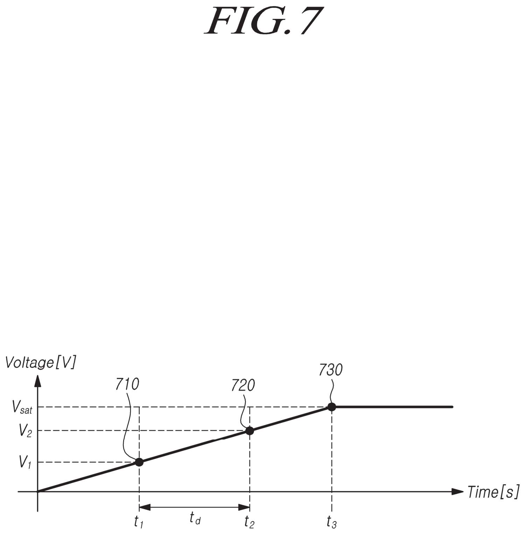

FIG. 7 is a graph representing a voltage at a certain point of a soft starter (e.g., the soft starter 300 of FIG. 6) over time, according to an embodiment. FIG. 7 may be understood as a graph representing a voltage (Vₛₛ) applied to a capacitor 321 (e.g., the capacitor (Cₛₛ) 321 of FIG. 6) making up a first element unit 320 (e.g., the first element unit 320 of FIG. 6).

Referring to FIG. 7, a driving unit (e.g., the driving unit 310 of FIG. 6) may output an operating voltage, which is a signal having a predetermined voltage, to the first element unit 320. As time elapses, the value of voltage applied to the capacitor 321 may increase. In case that the value of the voltage applied to the capacitor 321 exceeds a threshold value, a gate signal for connecting the third switching element (e.g., the third switching element 111-2 of FIG. 3B) and the fourth switching element (e.g., the fourth switching element 113-2 of FIG. 3B) may be outputted.

According to an embodiment, a voltage of as much as V₁ may be applied to the capacitor 321 at a time point t₁. At the time point t₁, the driving unit 310 may output the gate signal A and the gate signal B for connecting the first switching element (e.g., the first switching element 111 of FIG. 3A) and the second switching element (e.g., the second switching element 113 of FIG. 3A). In case that the gate terminal Q₁ of the first switching element 111 and the gate terminal Q₂ of the second switching element 113 receive the gate signal A and the gate signal B, the first switching element 111 and the second switching element 113 may be connected to each other. The first converter circuit (for example, the first converter circuit 100 of FIG. 1) may be activated in response to the connection between the first switching element 111 and the second switching element 113. A threshold voltage V1 at which the first converter circuit 100 is activated may be referred to as a first threshold driving voltage.

According to an embodiment, a voltage of as much as V₂ may be applied to the capacitor 321 at time point t₂ after the delay time t_{d} has elapsed from the time point t₁. At the time point t₂, the diode 323 of the first device unit 320 is turned on, and thus the second element unit 330 may form a ground path. A voltage of a signal input to the second element unit 330 and a signal output from the collector source voltage 331 may be input to the gate terminal of the switching element A 341 and the gate terminal of the switching element B 343. The voltage intensity of the signal may be a gate signal controlled to connect the switching element A 341 and the switching element B 343. The gate signal A' for controlling the switching element A 341 to be connected and to connect the third switching element (e.g., the third switching element 111-2 of FIG. 3A) may have a delay time of t_{d} as compared to the gate signal A. The gate signal B' for controlling the switching element B 343 to be connected and to connect the fourth switching element (e.g., the fourth switching element 113-2 of FIG. 3A) may have a delay of t_{d} as compared to the gate signal B. The second converter circuit 100-2 may be activated by the gate signal A' and the gate signal B'. A threshold voltage V2 at which the second converter circuit 100-2 is activated may be referred to as a second threshold driving voltage.

According to an embodiment, the intensity of a voltage of a signal accumulated in the capacitor 321 in the driving unit 310 may increase over time and then be saturated at a predetermined time point. The intensity of a voltage saturated at the predetermined time point may be referred to as a saturation driving voltage Vₛₐₜ. For example, a voltage as much as Vₛₐₜ may be applied to the capacitor 321 at a time point t₃. Values of the V₁, V₂, and Vₛₐₜ may have the relationship of V₁<V₂<Vₛₐₜ. The intensity of the saturation voltage Vₛₐₜ is not limited to a specific voltage, and may have various values according to the capacitance of the capacitor 321.

According to an embodiment, the first threshold driving voltage V₁ and the second threshold driving voltage V₂ may be set in consideration of the delay time t_{d}. The first threshold driving voltage V₁ and the second threshold driving voltage V₂ may be set based upon the delay time t_{d} being longer or shorter. The time point t₃ at which the saturation driving voltage Vₛₐₜ is reached may be set to have a value after the time point t₂ at which the second threshold driving voltage V₂ is reached.

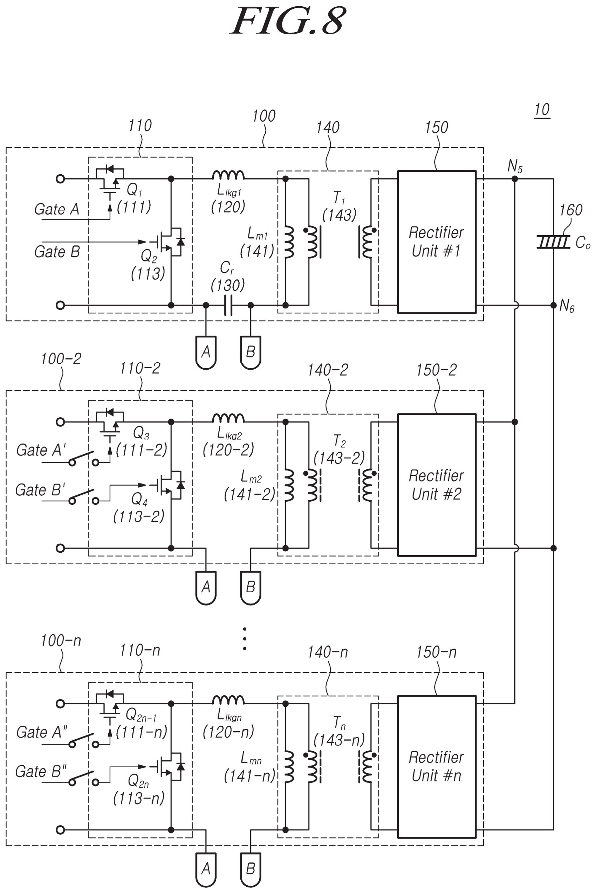

FIG. 8 illustrates an example structure of a converter circuit 10 according to an embodiment. FIG. 8 may be understood that it shows an additional embodiment where the converter circuit 10 includes n divided converter circuits (100, 100-2, ... 100-n).

Referring to FIG. 8, the converter circuit 10 may be configured to include at least three converter circuits. For example, the converter circuit 10 may further include at least one converter circuit (e.g., at least one of the third converter circuit 100-3 to an nth converter circuit 100-n), in addition to the first converter circuit 100 and the second converter circuit 100-2. That is, the converter circuit 10 may be composed of n divided converter circuits. Here, the number 'n' may be understood as a natural number of 3 or more. Hereinafter, redundant descriptions in FIG. 1 to FIG. 7 will not be reiterated and the description will be made mainly with respect to their differences.

For example, the third converter circuit may be connected in parallel with the first converter circuit 100 and/or the second converter circuit 100-2. In such a case, the control unit 20 may be configured to control the second half-bridge unit 110-2 and the third half-bridge unit included in the third converter circuit 100-n so that the second converter circuit 100-2 and the third converter circuit may be sequentially activated at a second time interval t_{d'}. For example, the soft starter (the soft starter 300 of FIG. 6) may be configured to output a third control signal (the gate signal A" and the gate signal B") for the switching operation of the third half-bridge unit in response to the elapse of the second time interval (t_{d'}), after the second control signal (gate signal A' and gate signal B') for the switching operation of the second half-bridge unit 110-2 is input.

According to an embodiment, the nth converter circuit 100-n may include a half bridge part 110-n, a leakage inductor 120-n, a transformer 140-n, and a rectifier unit 150-n. The nth converter circuit 100-n may be connected in parallel with the first converter circuit 100, the second converter circuit 100-2, the third converter circuit 100-3, ... the (n-1)th converter circuit 100-(n-1), such that it shares the resonance capacitor 130 with other converter circuits 110 and 110-2.

According to an embodiment, an output terminal of the nth converter circuit (100-n) may be connected to an electrolytic capacitor 160. That is, an output terminal of the nth rectifier unit (150-n) included in the nth converter circuit (100-n) may be connected to the electrolytic capacitor 160.

According to an embodiment, the half-bridge unit (110-n) included in the nth converter circuit (100-n) may include two switching elements (111-n and 113-n). The switching elements (111-n and 113-n) may include a (2n-1)th switching element 111-n and a (2n)th switching element 113-n.

According to an embodiment, the control unit 20 (e.g., the control unit 20 of FIG. 3A) can sequentially activate the first to nth converter circuits (100, 100-2, ... 100-n).

According to an embodiment, to sequentially activate the first to nth converter circuits (100, 100-2, ... 100-n), a soft starter (e.g., the soft starter 300 of FIG. 6) may be provided. An input terminal of the soft starter 300 may be connected to an output terminal of a driving unit (e.g., the driving unit 310 of FIG. 6). An output terminal of the soft starter 300 may be connected to a gate terminal provided in a switching element included in the half-bridge unit (110, 110-2, ... 110-n) of a split converter circuit included in the converter circuit 10. The switching elements included in the half-bridge unit (110, 110-2, ... 110-n) may be connected in response to a voltage value of a signal output by the soft starter 300. Accordingly, the first to nth converter circuits (100, 100-2, ... 100-n) may be sequentially activated.

For example, the control unit 20 may activate the first converter circuit 100 and, after a predetermined time has elapsed, activate the second converter circuit 100-2. The control unit (for example, the control unit 20 of FIG. 3A) may activate the second converter circuit 100-2 and, after a predetermined time has elapsed, activate the third converter circuit 100-3. The control unit 20 may activate the (n-1)th converter circuit 100-(n-1) and, after a predetermined time has elapsed, activate the nth converter circuit 100-n. Although not described herein, the first to nth converter circuits (100, 100-2, ... 100-n) included in the converter circuit 10 may be activated in any order, without limitation, so that one split converter circuit is activated and then, after a predetermined time has elapsed, another split converter circuit is activated. However, for convenience of description, it is assumed in the disclosure that the first to nth converter circuits 100, 100-2, ... 100-n) are sequentially activated in ascending order.

According to an embodiment, in case that one converter circuit (e.g., the first converter circuit 100) is activated and, after a predetermined time has elapsed, another converter circuit (e.g., the second converter circuit 100-2) is activated, the predetermined time may be referred to as a first time interval or a first delay time t_{d1}. In case that one converter circuit (e.g., the second converter circuit 100-2) is activated and, after a predetermined time has elapsed, another converter circuit (e.g., the third converter circuit 100-3) is activated, the predetermined time may be referred to as a second time interval or a second delay time t_{d2}. Likewise, in case that one converter circuit (e.g., (n-1)th converter circuit 100-(n-1) is activated and, after a predetermined time has elapsed another converter circuit (e.g., the nth converter circuit 100-n) is activated, the predetermined time may be referred to as an (n-1)th time interval or an (n-1)th delay time t_{d(n-1)}.

According to an embodiment, the first to (n-1)th delay times t_{d1}, t_{d2}, ......t_{d(n-1)} may be several millimeters second. The first to (n-1)th delay times t_{d1}, t_{d2}, ... t_{d(n-1)} may be the same as or different from each other. That is, the first to (n-1)th delay times t_{d1}, t_{d2}, ... t_{d(n-1)} may have the same time interval, or may have different time intervals. At least two or more delay times of the first to (n-1)th delay times t_{d1}, t_{d2}, ... t_{d(n-1)} may have the same time interval.

According to an embodiment, the control unit 20 may sequentially activate the split converter circuits according to the first to (n-1)th delay times t_{d1}, t_{d2}, ... t_{d(n-1)} , thereby decreasing the inrush current. Since the first to nth converter circuits (100, 100-2, ...100-n) are sequentially activated, it is possible to decrease the magnitude of the inrush current generated at the inductors (120, 120-2, ...120-n) present in the first to nth converter circuits (100, 100-2, ...100-n) compared to the case of actuating the first to nth converter circuits (100, 100-2, ...100-n) at the same time.

An electronic device according to an embodiment of the disclosure may include a first converter circuit 100 having a resonant capacitor (Cᵣ) 130, a second converter circuit 100-2 connected in parallel with the first converter circuit 100 to share the resonant capacitor 130, and a control unit 20 configured to control an activation of the first converter circuit 100 and the second converter circuit 100-2. The control unit 20 may be configured to control a first half-bridge unit 110 included in the first converter circuit 100 and a second half-bridge unit 110-2 included in the second converter circuit 100-2 so that the first converter circuit 100 and the second converter circuit 100-2 are sequentially activated with a first time interval (t_{d}).

In the electronic device according to an embodiment of the disclosure, the first converter circuit 100 may include a first leakage inductor 120 and a first transformer 140, and the second converter circuit 100-2 may include a second leakage inductor 120-2 and a second transformer 140-2.

The electronic device according to an embodiment of the disclosure may include an electrolytic capacitor 160 connected in parallel to a secondary side output terminal of the first transformer 140 and a secondary side output terminal of the second transformer 140-2.

In the electronic device according to an embodiment of the disclosure, the control unit 20 may include a soft starter 300 configured to output a second control signal (gate signal A' and gate signal B') for a switching operation of the second half-bridge unit 110-2 in response to the first time interval (t_{d}) elapsing after a first control signal (gate signal A and gate signal B) for a switching operation of the first half-bridge unit 110 is inputted.

In the electronic device according to an embodiment of the disclosure, the soft starter 300 may include a first element unit 320 configured to perform a switching operation at the first time interval (t_{d}) in response to charging/discharging by a supply voltage, a second element unit 330 configured to generate a first switching signal in response to an operation of the first element unit 320 being turned on at the first time interval (t_{d}), and a switch unit 341 and 343 configured to receive the first control signal (the gate signal A and the gate signal B) as input and to output the second control signal (the gate signal A' and the gate signal B') in response to the first switching signal.

In the electronic device according to an embodiment of the disclosure, the first half-bridge unit 110 may include a first switching element (Q₁) configured to be turned on or turned off by a first gate signal (gate signal A), which is one of the first control signals, and a second switching element (Q₂) configured to be turned on or turned off by a second gate signal (gate signal B), which is one of the first control signals.

In the electronic device according to an embodiment of the disclosure, the second half-bridge unit 110-2 may include a third switching element (Q₃) configured to be turned on or turned off by a third gate signal (gate signal A'), which is one of the second control signals, and a fourth switching element (Q₄) configured to be turned on or turned off by a fourth gate signal (gate signal B'), which is one of the second control signals.

The electronic device according to an embodiment of the disclosure may include a third converter circuit (100-n) connected in parallel with the first converter circuit 100 to share the resonant capacitor 130. The control unit 20 may be configured to control a second half-bridge unit 110-2 included in the second converter circuit 100-2 and a third half-bridge unit 110-n included in the third converter circuit (100-n) so that the second converter circuit 100-2 and the third converter circuit (100-n) are sequentially activated with a second time interval

In the electronic device according to an embodiment of the disclosure, the control unit 20 may be configured to control the first time interval (t_{d}) and the second time interval (t_{d'}) to have the same value.

In the electronic device according to an embodiment of the disclosure, the control unit 20 may be configured to control the first time interval (t_{d}) and the second time interval (t_{d'}) to have different values.

In the electronic device according to an embodiment of the disclosure, the control unit 20 may include a soft starter 300 configured to output a third control signal (gate signal A" and gate signal B") for a switching operation of the third half-bridge unit 110-n in response to the second time interval (t_{d'}) elapsing after a second control signal (gate signal A' and gate signal B') for a switching operation of the second half-bridge unit 110-2 is inputted.

In the electronic device according to an embodiment of the disclosure, the soft starter 300 may include a third element unit 350 configured to perform a switching operation at the second time interval (t_{d'}) in response to charging/discharging by a supply voltage, a fourth element unit 360 configured to generate a second switching signal in response to an operation of the first element unit 320 being turned on at the second time interval (t_{d}), and a switch unit 341 and 343 configured to receive the second control signal (gate signal A' and gate signal B') as input and to output the third control signal (gate signal A" and gate signal B") in response to the second switching signal.

In the electronic device according to an embodiment of the disclosure, the third half-bridge unit 110-n may include a fifth switching element (Q₂ₙ₋₁) configured to be turned on or turned off by a fifth gate signal (gate signal A"), which is one of the third control signals, and a sixth switching element (Q₂ₙ) configured to be turned on or turned off by a sixth gate signal (gate signal B"), which is one of the third control signals.

In the electronic device according to an embodiment of the disclosure, the first element unit 320 may include a first capacitor (Cₛₛ) 321 located between a terminal to which the supply voltage is inputted and a ground, and a seventh switching element 323 configured to be switched in response to charging/discharging of the first capacitor (Cₛₛ) 321.

In the electronic device according to an embodiment of the disclosure, the first element unit 320 may include a first capacitor (Cₛₛ) 321 located between a terminal to which the supply voltage is inputted and a ground, and a seventh switching element 323 configured to be switched in response to charging/discharging of the first capacitor (Cₛₛ) 321.

In the electronic device according to an embodiment of the disclosure, the second element unit 330 may include an eighth switching element 333 configured to output the first switching signal in response to turning on of the seventh switching element 323.

In an electronic device according to an embodiment of the disclosure, a resistor and a capacitor may be connected in parallel between an output terminal of the switch units 341 and 343 where the second control signal (gate signal A' and gate signal B') is outputted and the ground.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled" or "connected" to another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, 'logic', 'logic block', 'component', 'part', 'portion', or 'circuit'. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., an internal memory or an external memory) that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a first converter circuit (100) having a resonant capacitor (Cᵣ) (130) and including a first leakage inductor (120) and a first transformer (140);
a second converter circuit (100-2) connected in parallel with the first converter circuit (100) to share the resonant capacitor (130) and including a second leakage inductor (120-2) and a second transformer (140-2); and
a control unit (20) configured to control an activation of the first converter circuit (100) and the second converter circuit (100-2).
wherein the control unit (20) is configured to control a first half-bridge unit (110) included in the first converter circuit (100) and a second half-bridge unit (110-2) included in the second converter circuit (100-2) so that the first converter circuit (100) and the second converter circuit (100-2) are sequentially activated with a first time interval (t_{d}).

2. The electronic device of claim 1, comprising an electrolytic capacitor (160) connected in parallel to a secondary side output terminal of the first transformer (140) and a secondary side output terminal of the second transformer (140-2).

3. The electronic device of claim 1, wherein the control unit (20) comprises a soft starter 300 configured to output a second control signal (gate signal A' and gate signal B') for a switching operation of the second half-bridge unit (110-2) in response to the first time interval (t_{d}) elapsing after a first control signal (gate signal A and gate signal B) for a switching operation of the first half-bridge unit (110) is inputted.

4. The electronic device of claim 3, wherein the soft starter (300) comprises:
a first element unit (320) configured to perform a switching operation at the first time interval (t_{d}) in response to charging/discharging by a supply voltage;
a second element unit (330) configured to generate a first switching signal in response to an operation of the first element unit (320) being turned on at the first time interval (t_{d}); and
a switch unit (341; 343) configured to receive the first control signal (the gate signal A and the gate signal B) as input and to output the second control signal (the gate signal A' and the gate signal B') in response to the first switching signal.

5. The electronic device of any one of claims 1 to 3, wherein the first half-bridge unit (110) comprises:
a first switching element (Q₁) configured to be turned on or turned off by a first gate signal (the gate signal A), which is one of the first control signals; and
a second switching element (Q₂) configured to be turned on or turned off by a second gate signal (the gate signal B), which is one of the first control signals.

6. The electronic device of any one of claims 1 to 3, wherein the second half-bridge unit (110-2) comprises:
a third switching element (Q₃) configured to be turned on or turned off by a third gate signal (the gate signal A'), which is one of the second control signals: and
a fourth switching element (Q₄) configured to be turned on or turned off by a fourth gate signal (the gate signal B'), which is one of the second control signals.

7. The electronic device of any one of claims 1 to 6, comprising a third converter circuit (100-n) connected in parallel with the first converter circuit (100) to share the resonant capacitor (130),
wherein the control unit (20) is configured to control the second half-bridge unit (110-2) included in the second converter circuit (100-2) and a third half-bridge unit (110-n) included in the third converter circuit (100-n) so that the second converter circuit (100-2) and the third converter circuit (100-n) are sequentially activated with a second time interval (t_{d'}).

8. The electronic device of claim 1 or claim 7, wherein the control unit (20) is configured to control the first time interval (t_{d}) and the second time interval (t_{d'}) to have the same value.

9. The electronic device of claim 1 or claim 7, wherein the control unit (20) is configured to control the first time interval (t_{d}) and the second time interval (t_{d'}) to have different values.

10. The electronic device of claim 7, wherein the control unit (20) comprises the soft starter (300) configured to output a third control signal (gate signal A" and gate signal B") for a switching operation of the third half-bridge unit (110-n) in response to the second time interval (t_{d'}) elapsing after a second control signal (gate signal A' and gate signal B') for a switching operation of the second half-bridge unit (110-2) is inputted.

11. The electronic device of claim 10, wherein the soft starter (300) comprises:
a third element unit (320) configured to perform a switching operation at the second time interval (t_{d'}) in response to charging/discharging by a supply voltage;
a fourth element unit (330) configured to generate a second switching signal in response to an operation of the first element unit (320) being turned on at the second time interval (t_{d'}); and
a switch unit (341; 343) configured to receive the second control signal (gate signal A' and gate signal B') as input and to output the third control signal (gate signal A" and gate signal B") in response to the second switching signal.

12. The electronic device of claim 10, wherein the third half-bridge unit (110-n) comprises:
a fifth switching element (Q₂ₙ₋₁) configured to be turned on or turned off by a fifth gate signal (gate signal A"), which is one of the third control signals; and
a sixth switching element (Q₂ₙ) configured to be turned on or turned off by a sixth gate signal (gate signal B"), which is one of the third control signals.

13. The electronic device of claim 4, wherein the first element unit (320) comprises:
a first capacitor (Cₛₛ) (321) located between a terminal to which the supply voltage is inputted and a ground; and
a seventh switching element (323) configured to be switched in response to charging/discharging of the first capacitor (Cₛₛ) (321).

14. The electronic device of claim 13, wherein the second element unit (330) comprises an eighth switching element (333) configured to output the first switching signal in response to turning on of the seventh switching element (323).

15. The electronic device of claim 4, wherein a resistor and a capacitor are connected in parallel between an output terminal of the switch unit (341; 343) where the second control signal (gate signal A' and gate signal B') is outputted and a ground.
